Europäisches Patentamt

European Patent Office

Office européen des brevets

(19)

(11) Veröffentlichungsnummer: **0 076 337**
**B1**

(12) # EUROPÄISCHE PATENTSCHRIFT

(45) Veröffentlichungstag der Patentschrift:
31.07.85

(21) Anmeldenummer: 81107877.3

(22) Anmeldetag: 03.10.81

(51) Int. Cl.⁴: **B 65 G 11/16,** B 65 G 27/04,
B 07 B 1/46, F 27 B 21/06

(54) Trog- oder Siebbelag aus Platten.

(43) Veröffentlichungstag der Anmeldung:
13.04.83 Patentblatt 83/15

(45) Bekanntmachung des Hinweises auf die Patenterteilung:
31.07.85 Patentblatt 85/31

(84) Benannte Vertragsstaaten:
BE DE FR GB IT

(56) Entgegenhaltungen:
DD - A - 106 993
DE - B - 1 136 642
DE - B - 2 417 483
DE - B - 2 805 415
FR - A - 1 310 776
US - A - 3 195 713
US - A - 3 827 159

"Soviet Inventions Illustrated", Week B 51, 6. Februar
1980, Section P 43

(73) Patentinhaber: CARL SCHENCK AG,
Landwehrstrasse 55 Postfach 40 18, D-6100 Darmstadt
(DE)

(72) Erfinder: Pürkhardt, Edmund, Heidelberger Strasse 13,
D-6100 Darmstadt (DE)

(74) Vertreter: Brand, Fritz, Dipl.-Ing., Carl Schenck AG
Patentabteilung Landwehrstrasse 55 Postfach 4018,
D-6100 Darmstadt (DE)

## Beschreibung

Die Erfindung betrifft einen Trog- oder Siebbelag aus Platten, insbesondere aus gegossenen Platten für die Förderung und/oder Absiebung heißer Materialien wie Heißsinter, mit in Bahnen (in Förderrichtung verlaufend) und in Reihen (quer zur Förderrichtung verlaufend) angeordneten Platten, wobei die Platten in Förderrichtung einander überlappen.

Bisher wurden gegossene Trog- oder Siebplatten zur Herstellung eines Trog- oder Siebbelags, insbesondere für die Förderung und/oder Absiebung von Heißsinter, in Förderrichtung überlappend angeordnet und in Querrichtung an den Stoßstellen mit Dichtfalzen und Abdeckleisten versehen (wie z. B. in FR-A-1 310 776 beschrieben). Dadurch wurde eine im wesentlichen ebene und an den Stoßstellen der Einzelplatten dichte Trog- bzw. Siebfläche gebildet. Der Nachteil dieser Anordnung liegt darin, daß die Forderung nach Maßhaltigkeit der Platten bei der Herstellung nur mit großem Aufwand erfüllt werden kann, da die Platten an den verstärkten Stoßstellen beim Abkühlen zum Verziehen neigen. Die Platten werden daher gerichtet und in Sätzen zusammengestellt. Die Einzelplatten sind genau aneinander angepaßt und nicht ohne weiteres austauschbar. Auch bei aus Blech hergestellten Platten können sich ähnliche Schwierigkeiten ergeben.

Es ist die Aufgabe der vorliegenden Erfindung, die bekannten Beläge bzw. Platten zu verbessern und so zu vereinfachen, daß sie leichter herstellbar und die Einzelplatten leicht austauschbar sind. Ein Nacharbeiten der Platten oder eine mechanische Bearbeitung soll vermieden werden. Diese Aufgabe wird durch die in den Patentansprüchen angegebenen Merkmale gelöst. Die Ansprüche enthalten auch Ausgestaltungen der Erfindung.

Durch die Überlappung der Platten auch quer zur Förderrichtung wird es möglich, die Toleranzen für die Plattenabmessungen größer zu wählen und dadurch die Herstellung der Einzelplatten und des Plattenbelags zu vereinfachen. Eine Anpassung der Einzelplatten untereinander ist nicht mehr erforderlich. Es können daher auch einzelne Platten ausgetauscht bzw. ersetzt werden.

Die Stoßkanten der jeweils aneinander stoßenden gleich hoch liegenden Platten verlaufen zweckmäßigerweise im Überlappungsbereich der darüber und/oder darunterliegenden Platten. Dadurch wird der Durchtritt von Material durch den Trog- oder Siebbelag verhindert. Die Stoßkanten können hierbei geradlinig, gekrümmt oder winkelförmig ausgebildet sein. Es ist auch möglich, die jeweils unten liegenden Platten in einem Überlappungsbereich vergrößert auszubilden und dadurch den zwischen den darüber liegenden Platten vorhandenen Spalt abzudecken.

Weitere vorteilhafte Ausgestaltungen ergeben sich, wenn die jeweils innen liegenden Platten von den in Querrrichtung jeweils außen liegenden Platten überlappt werden oder wenn die Plattenbahnen in Querrichtung abwechselnd unter oder über benachbarten Plattenbahnen angeordnet sind.

Eine Überlappung der Platten in und quer zur Förderrichtung ist auch möglich, wenn die Platten abweichend von einer rechteckigen oder quadratischen Plattengrundform mindestens eine schräg zur zugehörigen Plattenmittellinie verlaufende Plattenkante aufweisen oder wenn die Platten benachbarter Plattenbahnen oder Plattenreihen in geeigneter Weise um die Überlappungsbreite zueinander versetzt angeordnet sind. In diesen Fällen ist eine besondere Ausbildung der Stoßstellen gleich hoch liegender und aneinander stoßender Platten bzw. der Plattenecken solcher Platten nicht erforderlich.

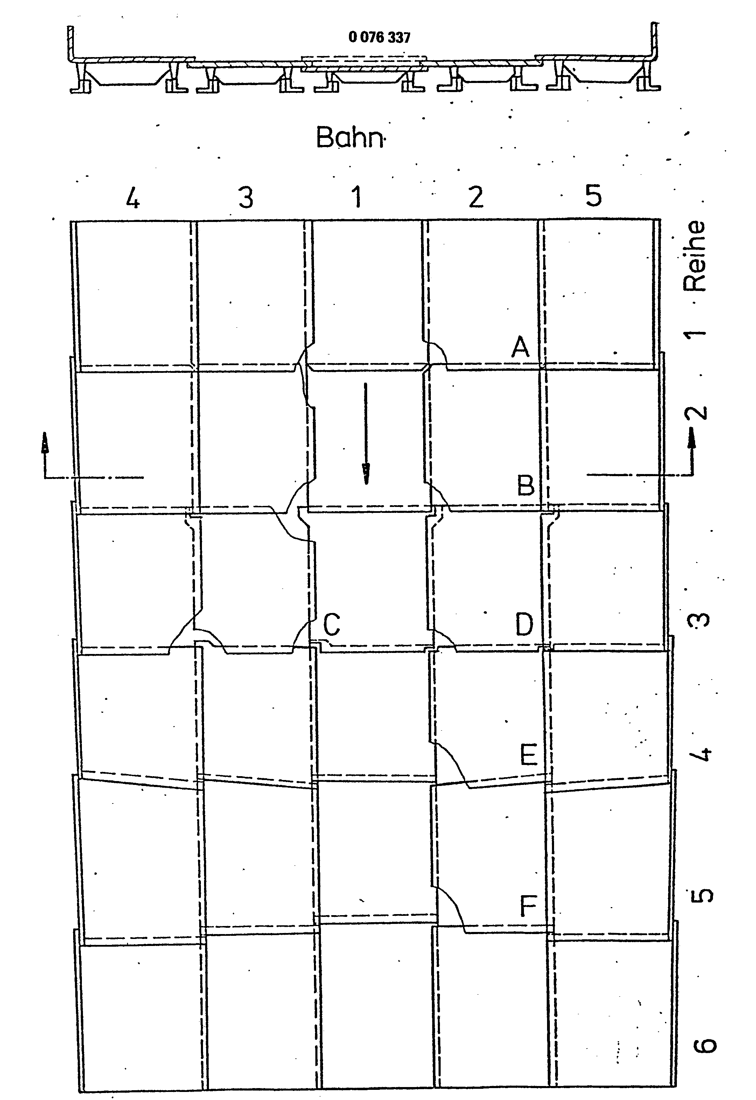

Die Erfindung wird an einem Ausführungsbeispiel in der Zeichnung dargestellt und in der Beschreibung näher erläutert. Die Zeichnung zeigt einen Trog- bzw. Siebbelag aus gegossenen Platten in der Draufsicht und im Querschnitt, wobei in der Draufsicht verschiedene Ausführungsformen von Stoßstellen gleich hoch liegender Platten bzw. von Plattenanordnungen dargestellt sind.

Der dargestellte Belag besteht aus 5 Bahnen (1—5) und 6 Reihen (1—6) von Einzelplatten. Bei solchen Belägen werden im allgemeinen 2 bis 5 Bahnen und bis zu 20 Reihen von Platten vorgesehen. Die Platten weisen meist eine rechteckige Grundform auf.

Die Platten der mittleren Bahn 1 werden in Querrichtung von den Platten der Bahnen 2 und 3, wie dargestellt, überlappt. Die Platten der Bahnen 4 und 5 liegen wiederum auf den Platten der Bahnen 3 und 2 auf. Von der Mitte der Belagfläche ausgehend werden also die innenliegenden Platten von den jeweils außen liegenden Platten überlappt. Dadurch ergibt sich eine zur Belagmitte symmetrische Anordnung der Platten bzw. der Überlappung.

Es ist auch möglich, die Platten der Bahn 1, wie in der Zeichnung gestrichelt (im Querschnitt) dargestellt, über den Platten von Bahn 2 und 3 anzuordnen. Dadurch ergibt sich eine Plattenanordnung, bei der die Platten in Querrichtung abwechselnd über und unter den Platten benachbarter Plattenbahnen liegen.

Die Platten können auch so angeordnet werden, daß die Überlappung in einer Richtung durchgehend von einer Randplatte aus erfolgt, so daß in Querrichtung gesehen, die jeweils nachfolgende Plattenbahn überlappend über oder unter der vorhergehenden Plattenbahn angeordnet ist. Beispiel: Bahn 5 liegt auf Bahn 2 und Bahn 2 liegt auf Bahn 1 auf (wie dargestellt), Bahn 1 liegt jedoch auf Bahn 3 und diese auf Bahn 4 auf, d. h. die Platten von Bahn 3 sind unterhalb von Bahn 1 und die Platten von Bahn 4 unterhalb von Bahn 3 angeordnet. Wenn die Einzelplatten in Querrichtung um die Plattenstärke schräg gestellt werden, ergibt sich auch bei dieser Anordnung wieder eine praktisch ebene und waagrechte Belagfläche.

In Förderrichtung (durch Pfeil angedeutet) liegen die Platten der einzelnen Reihen jeweils auf den Platten der nachfolgenden Reihe auf. Durch die Überlappung der Plattenbahnen und der Plattenreihen bzw. durch die Überlappung der Platten in Förderrichtung und quer zur Förderrichtung wird eine dichte Belagfläche gebildet.

Die Platten der Bahnen 4 und 5 weisen senkrechte Seitenwände auf, die verhindern, daß Material seitlich vom Trog- oder Siebbelag herunterfällt.

Bei der Überlappung der Einzelplatten in Längs- und in Querrichtung werden die Stoßstellen bzw. die Stoßkanten von jeweils zwei gleich hoch liegenden und an den Ecken aneinander stoßenden Platten zueinander passend ausgebildet. Im dargestellten Ausführungsbeispiel liegen z. B. die Platten in Reihe 1/Bahn 1, Reihe 2/Bahn 2 und 3 und Reihe 3/Bahn 4 und 5 gleich hoch. Verschiedene mögliche Ausführungsformen von Stoßstellen und von Plattenanordnungen werden nachstehend beschrieben.

In der Ausführungsform A sind die Ecken der beiden jeweils aneinander stoßenden Platten abgeschrägt. Der zwischen den beiden Platten entstehende Spalt wird durch die darüber und darunter liegenden Platten abgedeckt. Beispiel: Der Spalt zwischen der Platte in Bahn 1/Reihe 1 und der gleich hoch liegenden Platte in Bahn 2/Reihe 2 wird durch die Platten in Bahn 2/Reihe 1 (darüberliegend) und Bahn 1/Reihe 2 (darunterliegend) abgedeckt usw.

Bei den Ausführungsformen B und C weist eine der beiden aneinander stoßenden Platten eine Ausnehmung für die andere Platte auf. Bei der Ausführungsform D weisen beide Platten im Stoßbereich zueinander passende Aussparungen auf. Anstelle der bei den Ausführungsformen A bis D dargestellten geradlinigen oder abgewinkelten Stoßkanten können auch gekrümmte Stoßkanten vorgesehen werden.

Wie bei den Ausführungsformen B und C dargestellt, können die jeweils unten liegenden Platten im Überlappungsbereich der darüberliegenden Platten vergrößert ausgebildet werden. Dadurch ergeben sich Dichtflächen, die den direkten Durchtritt von Material durch die Spalte an den Stoßstellen verhindern. Die Dichtflächen bedingen lediglich eine geringfügige Abweichung von der im allgemeinen rechteckigen Grundform der Einzelplatten.

Eine Überlappung der Platten in Förderrichtung und quer zur Förderrichtung (in Längs- und Querrichtung der Platten) ist ohne Aussparungen an den Plattenecken auch möglich, wenn abweichend von einer rechteckigen oder quadratischen Plattenform mindestens eine Plattenkante schräg zur zugehörigen Plattenmittellinie verlaufend ausgebildet wird. Hierbei können entweder die Längs- oder die Querkanten der Platten schräg ausgeführt werden. Die Platten werden dazu jeweils an denjenigen Längs- oder Querkanten schräg ausgebildet, an denen sie an gleich hoch liegende Platten stoßen. Das bedeutet, daß abgesehen von den Rand- oder Endplatten und gegebenenfalls den Mittelplatten immer zwei gegenüberliegende Plattenkanten einer Platte schräg sind, wobei die schrägen Kanten etwa parallel zueinander verlaufen.

Bei der Ausführungsform E sind die quer zur Förderrichtung verlaufenden Plattenkanten der Platten in den Plattenbahnen 2—5 beiderseits der mittleren Plattenbahn, wie dargestellt (symmetrisch zur Belagmitte), leicht schräg ausgeführt. Die Schrägstellung der Kanten wird etwa der Überlappungsbreite der Platten entsprechend gewählt. Es ergibt sich hierbei eine leicht rautenförmige oder trapezförmige (Rand- und Endplatten) Plattengrundform. Aussparungen an den Ecken von aneinander stoßenden Platten sind nicht erforderlich. Bei den Platten der mittleren Plattenbahn 1 kann im dargestellten Beispiel die rechteckige Plattengrundform beibehalten werden.

Wenn die Platten in Querrichtung von einer Randplatte aus durchgehend in gleicher Richtung überlappend angeordnet sind (wie bereits beschrieben), werden die Querkanten aller Platten in gleicher Richtung schräg verlaufend ausgeführt (und nicht wie dargestellt links und rechts der mittleren Plattenbahn 1 in entgegengesetzter Richtung schräg verlaufend bzw. symmetrisch zur mittleren Plattenbahn).

Die Ausführungsform F zeigt eine Plattenanordnung mit rechteckigen Platten, bei der die Platten benachbarter Plattenbahnen in Förderrichtung jeweils etwa um die Überlappungsbreite versetzt zueinander angeordnet sind. Dadurch kann eine rechteckige oder quadratische Plattengrundform beibehalten werden, ohne daß Aussparungen an den Plattenecken oder schräge Plattenkanten erforderlich sind. Die Anfangs- und Endplatten (die erste und letzte Platte) jeder Plattenbahn können so gestaltet werden, daß der gesamte Trog- oder Siebbelag eine rechteckige Grundfläche aufweist.

Bei der Ausführungsform F können die Platten in den Bahnen 2—5 rechts und links von Bahn 1, wie dargestellt, versetzt angeordnet werden (Versetzung symmetrisch zur Belagmittellinie). Die Platten können in den Plattenreihen auch so gegeneinander versetzt werden, daß jeweils eine Plattenbahn um die Überlappungsbreite vor oder hinter den benachbarten Bahnen angeordnet ist. Beispiel: Die Platten in den Bahnen 1, 4 und 5 sind in Förderrichtung gesehen auf gleicher Höhe nebeneinander angeordnet und die Platten in den Bahnen 2 und 3 sind etwa um die Überlappungsbreite zurückversetzt. Hierbei liegen die Platten in den Bahnen 1, 4 und 5 über den Platten in den Bahnen 2 und 3.

Ähnlich wie in den Plattenbahnen können rechteckige oder quadratische Platten auch in den Plattenreihen versetzt zueinander angeordnet werden. Weiterhin ist es möglich, die Platten, wie bei Ausführungsform E beschrieben, über die Belagbreite gleichmäßig versetzt (nicht symmetrisch zur Mittellinie) anzuordnen.

Bei einem Trog- oder Siebbelag wird im allgemeinen nur eine der beschriebenen Ausführungsformen von Stoßstellen bzw. Plattenanordnungen vorgesehen. Es sind jedoch auch Kombinationen von unterschiedlichen Anordnungen möglich.

## Patentansprüche

1. Trog- oder Siebbelag aus Platten, insbesondere aus gegossenen Platten für die Förderung und/oder Absiebung heißer Materialien wie Heißsinter, mit in Bahnen (in Förderrichtung verlaufend) und in Reihen (quer zur Förderrichtung verlaufend) angeordneten Platten, wobei die Platten in Förderrichtung einander überlappend angeordnet sind, dadurch gekennzeichnet, daß die Trog- oder Siebplatten auch quer zur Förderrichtung überlappend angeordnet sind und daß gleich hoch liegende und aneinanderstoßende Platten an ihren jeweiligen Stoßstellen zueinander passend ausgebildet und/oder angeordnet sind.

2. Trog- oder Siebbelag nach Anspruch 1, dadurch gekennzeichnet, daß die Stoßkanten der jeweils aneinanderstoßenden gleich hoch liegenden Platten im Überlappungsbereich der darüber und/oder darunterliegenden Platten verlaufen.

3. Trog- oder Siebbelag nach Anspruch 1 oder 2, dadurch gekennzeichnet, daß die Stoßkanten gleich hoher Platten geradlinig, gekrümmt oder winkelförmig verlaufen.

4. Trog- oder Siebbelag nach einem der Ansprüche 1 bis 3, dadurch gekennzeichnet, daß die jeweils unten liegenden Platten in wenigstens einem Überlappungsbereich diesen überstehend ausgebildet sind.

5. Trog- oder Siebbelag nach einem der Ansprüche 1 bis 4, dadurch gekennzeichnet, daß — von der Belagmitte aus gesehen — die jeweils innen liegenden Platten (Plattenbahnen 1—3) von den in Querrichtung jeweils außen liegenden Platten (Plattenbahnen 2—5) überlappt werden.

6. Trog- oder Siebbelag nach Anspruch 1, dadurch gekennzeichnet, daß die Plattenbahnen in Querrichtung abwechselnd unter und über benachbarten Plattenbahnen angeordnet sind.

7. Trog- oder Siebbelag nach Anspruch 1, dadurch gekennzeichnet, daß die Platten abweichend von einer rechteckigen oder quadratischen Plattengrundform mindestens eine schräg zur zugehörigen Plattenmittellinie verlaufende Plattenkante aufweisen.

8. Trog- oder Siebbelag nach Anspruch 1 oder 6, dadurch gekennzeichnet, daß die Platten benachbarter Plattenbahnen bzw. Plattenreihen in bzw. quer zur Förderrichtung etwa um die Überlappungsbreite zueinander versetzt angeordnet sind.

## Claims

1. Trough or sieve bottom made of plates, in particular of cast plates for the conveyance and/or screening of hot materials such as hot sinter, with plates arranged in lines (running in the direction of conveyance) and in rows (running transverse to the direction of conveyance), the plates being arranged to overlap each other in the direction of conveyance, characterized in that the trough or sieve plates are also arranged to overlap transverse to the direction of conveyance and that plates lying at an equal height and abutting each other are constructed and/or arranged so as to fit each other at their respective abutment points.

2. Trough or sieve bottom according to Claim 1, characterized in that the abutment edges to the respectively abutting plates lying at an equal height run in the overlap region of the plates lying above and/or below.

3. Trough or sieve bottom according to Claim 1 or 2, characterized in that the abutment edges of plates of equal height run in a straight line, curved or in an angular shape.

4. Trough or sieve bottom according to one of Claims 1 to 3, characterized in that the plates lying underneath in each case in at least one overlap region are constructed so as to project thereover.

5. Trough or sieve bottom according to one of Claims 1 to 4, characterized in that — viewed from the centre of the bottom — the plates lying in each case on the inside (plate lines 1—3) are overlapped by the plates lying in each case on the outside in the transverse direction (plate lines 2—5).

6. Trough or sieve bottom according to Claim 1, characterized in that the plate lines are arranged in the transverse direction alternately below and above adjacent plate lines.

7. Trough or sieve bottom according to Claim 1, characterized in that the plates deviating from a rectangular or square basic plate form have at least one plate edge running obliquely to the relevant plate centre line.

8. Trough or sieve bottom according to Claim 1 or 6, characterized in that the plates of adjacent plate lines or plate rows are arranged staggered to each other in or transversely to the conveying direction for instance by the width of overlap.

## Revendications

1. Garniture en auge ou en crible comprenant des plaques, notamment des plaques coulées pour transporter et/ou cribler des matières chaudes telles que des battitures chaudes, comportant des plaques disposées en bandes (dirigées dans la direction de transport) et en rangées (perpendiculaires à la direction de transport), les plaques étant disposées de façon à se chevaucher dans la direction de transport, caractérisée en ce que les plaques d'auge ou de crible sont également diposées de façon à se chevaucher perpendiculairement à la direction de transport, et en ce que des plaques situées au même niveau et se touchant sont conformées et/ou disposées de façon à s'adapter les unes aux autres aux endroits où elles se joignent.

2. Garniture en auge ou en crible selon la revendication 1, caractérisée en ce que les bords de jonction des plaques situées au même niveau et qui se touchent s'étendent dans la zone de chevauchement des plaques situées au-dessus et/ou au-dessous.

3. Garniture en auge ou en crible selon la revendication 1 ou 2, caractérisée en ce que les bords de jonction de plaques au même niveau sont rectilignes, incurvées ou angulaires.

4. Garniture en auge ou en crible selon l'une des revendications 1 à 3, caractérisée en ce que les plaques sous-jacentes sont conformées, dans au moins une zone de chevauchement, de façon à en dépasser.

5. Garniture en auge ou en crible selon l'une des revendications 1 à 4, caractérisée en ce qu'en observant à partir du centre de la garniture, les plaques intérieures (bandes de plaques 1 à 3) sont chevauchées par les plaques extérieures en direction transversale (bandes de plaques 2—5).

6. Garniture en auge ou en crible selon la revendication 1, caractérisée en ce que les bandes de plaques sont disposées, en direction transversale, alternativement au-dessous et au-dessus de bandes de plaques voisines.

7. Garniture en auge ou en crible selon la revendication 1, caractérisée en ce que les plaques comportent, á partir d'une forme de base rectangulaire ou carrée, au moins une arête dirigée obliquement par rapport à l'axe de plaque correspondant.

8. Garniture en auge ou en crible selon la revendication 1 ou 6, caractérisée en ce que les plaques de bandes ou de rangées voisines sont disposées avec décalage mutuel sensiblement de la largeur de chevauchement dans la direction de transport, ou perpendiculairement à celle-ci.

0 076 337

Bahn

4 3 1 2 5

Reihe

1

A

2

B

C D

3

E

4

5

F

6

7